# EUROPÄISCHE PATENTSCHRIFT

(11) **EP 3 740 781 B1**
(45) Veröffentlichungstag und Bekanntmachung des Hinweises auf die Patenterteilung: **08.01.2025**
(21) Anmeldenummer: 18808309.1
(22) Anmeldetag: 22.11.2018
(51) Int. Cl.: G01S 13/32, G01S 13/58, G01S 13/86, G01S 13/931

(54) **VERFAHREN UND VORRICHTUNG ZUM PLAUSIBILISIEREN EINER QUERBEWEGUNG**
METHOD AND DEVICE FOR CHECKING THE PLAUSIBILITY OF A TRANSVERSE MOVEMENT
PROCÉDÉ ET DISPOSITIF PERMETTANT DE CONTRÔLER LA PLAUSIBILITÉ D'UN MOUVEMENT TRANSVERSAL

(30) Priorität: 18.01.2018 DE 102018200755
(43) Veröffentlichungstag der Anmeldung: 25.11.2020
(73) Patentinhaber: Robert Bosch GmbH, 70442 Stuttgart (DE)
(72) Erfinder: SCHLOSSER, Markus, 76137 Karlsruhe (DE); BUDDENDICK, Hermann, 71067 Sindelfingen (DE)
(86) Internationale Anmeldenummer: PCT/EP2018/082298
(87) Internationale Veröffentlichungsnummer: WO 2019/141414

(56) Entgegenhaltungen:
- EP-A1- 2 068 173
- DE-A1- 102009 029 465
- DE-A1- 102012 024 998
- US-A1- 2017 356 991
- LIZHEN CUI ET AL: "A compact and low cost MMW radar design for moving object detection", 2012 INTERNATIONAL CONFERENCE ON MICROWAVE AND MILLIMETER WAVE TECHNOLOGY (ICMMT), IEEE, 5 May 2012 (2012-05-05), pages 1 - 4, XP032451967, ISBN: 978-1-4673-2184-6, DOI: 10.1109/ICMMT.2012.6230097
- FLORIAN FOLSTER ET AL: "Lateral velocity estimation based on automotive radar sensors", RADAR 2006 : PROCEEDINGS OF 2006 CIE INTERNATIONAL CONFERENCE ON RADAR ; OCT. 16 - 19, 2006, SHANGHAI, CHINA, IEEE OPERATIONS CENTER, PISCATAWAY, NJ, 1 October 2006 (2006-10-01), pages 1 - 4, XP031073571, ISBN: 978-0-7803-9582-4
- KELLNER DOMINIK ET AL: "Instantaneous lateral velocity estimation of a vehicle using Doppler radar", PROCEEDINGS OF THE 16TH INTERNATIONAL CONFERENCE ON INFORMATION FUSION, ISIF ( INTL SOCIETY OF INFORMATION FUSI, 9 July 2013 (2013-07-09), pages 877 - 884, XP032512378, ISBN: 978-605-86311-1-3, [retrieved on 20131018]

## Beschreibung

Die vorliegende Erfindung betrifft ein Verfahren zum Plausibilisieren einer anfänglich bekannten Querbewegung eines Objekts, und eine entsprechende Vorrichtung. Die Erfindung betrifft insbesondere Fahrerassistenzsysteme mit einer derartigen Vorrichtung.

### Stand der Technik

Moderne Fahrerassistenzsysteme verfügen über Radarsensoren zum Überwachen des Fahrzeugumfelds. Im Gegensatz zu Videokameras können Radarsensoren die Relativgeschwindigkeiten eines Objektes mithilfe des Dopplereffekts direkt messen. Ein beispielhaftes Verfahren zur Objektdetektierung ist aus der DE 1994 9409 A1 bekannt. EP 2 068 173 A1 und DE 10 2012 024998 A1 betreffen Verfahren zur Messung von Querbewegungen. DE 10 2009 029465 A1 und US 2017/356991 A1 betreffen Radarsensoren. Querbewegungen werden thematisiert in Folster et al: "Lateral velocity estimation based on automotive radar sensors", RADAR 2006: Proceedings of 2006 CIE International Conference on Radar, 2006, Seiten 1-4, XP31073571, sowie in Kellner et al., "Instantaneous lateral velocity estimation of a vehicle using Doppler radar", Proceedings of the 16th International Conference on Information Fusion, 2013, Seiten 877-884, XP32512378.

Besonders verbreitet sind sogenannte FMCW-Verfahren (frequency modulated continuous wave).

Hierbei wird ein Radarsignal mit einer periodisch modulierten Frequenz ausgesendet und das an einem Objekt reflektierte Radarsignal wird anschließend empfangen und ausgewertet. Zusätzlich zur Relativgeschwindigkeit ermöglicht es das FMCW-Verfahren, anhand des Betrags des Frequenzabstandes zwischen dem ausgesendeten Radarsignal und dem empfangenen Radarsignal die Entfernung des Objekts zu bestimmen.

Die Messung von Objektwinkeln, d. h. Azimutwinkeln des Objekts relativ zur Hauptaussenderichtung der Radarvorrichtung ist mit Radarsensoren weniger genau zu realisieren als mit Videokameras. Die Genauigkeit hängt insbesondere von der Apertur des Radarsensors ab, insbesondere von der Breite des Arrays der Empfangsantenne. Weiter weisen FMCW-Verfahren größere Ungenauigkeiten auf als CW-Verfahren, da der im Dopplerspektrum analysierte Bereich stärker von anderen Objekten gestört wird. Insbesondere die Erkennung von Querbewegungen, d. h. Bewegungen des Objekts senkrecht zur Bewegungsrichtung der Radarvorrichtung bzw. des Fahrzeugs, sind daher häufig nicht leicht korrekt einzuschätzen.

Die Erfindung stellt ein Verfahren zum Plausibilisieren einer anfänglich bekannten Querbewegung eines Objekts mit den Merkmalen des Patentanspruchs 1 und eine Vorrichtung zum Plausibilisieren einer anfänglich bekannten Querbewegung eines Objekts mit den Merkmalen des Patentanspruchs 4 bereit.

Bevorzugte Ausführungsformen sind Gegenstand der jeweiligen Unteransprüche.

### Vorteile der Erfindung

Das ausgesendete Radarsignal stellt eine Sendesequenz mit konstanter Signalfrequenz dar, welche sich vorzugsweise durch eine Dauer auszeichnet, welche die Dauer einzelner Rampen von FMCW-modulierten Radarsignalen deutlich übersteigt. Anhand des Radarsignals mit konstanter Signalfrequenz können daher deutlich höhere Geschwindigkeitsauflösungen erzielt werden, als dies mit FMCW-modulierten Radarsignalen möglich wäre. Beispielsweise kann das Radarsignal mit konstanter

Signalfrequenz eine Dauer von 20 Millisekunden aufweisen, was einer Auflösung im Bereich von etwa 0,1 m/s entspricht.

Zusätzlich zur höheren Geschwindigkeitsauflösung ist auch die Winkelauflösung im Allgemeinen genauer. Dadurch kann eine auf andere Weise detektierte und anfänglich bekannte Querbewegung des Objekts plausibilisiert werden, welche anhand von FMCW-modulierten Radarsignalen bestimmt wurde. Insbesondere können kritische Querbewegungen, welche eine Kollisionsgefahr darstellen, plausibilisiert werden.

Unter "Plausibilisieren" kann im Sinne der Erfindung verstanden werden, dass die Existenz des detektierten Objekts verifiziert oder falsifiziert wird. Insbesondere kann eine Existenzwahrscheinlichkeit berechnet werden. Weiter kann darunter verstanden werden, dass die genaue Bewegung des Objekts überprüft wird. Hierzu kann insbesondere eine Kritikalität der Objektbewegung berechnet werden, welche etwa eine Kollisionswahrscheinlichkeit quantifizieren kann.

Gemäß einer bevorzugten Weiterbildung des Verfahrens wird die Querbewegung des Objekts plausibilisiert, falls eine dem Objekt entsprechende Dopplerverschiebung im Frequenzbereich festgestellt wird.

Gemäß einer bevorzugten Weiterbildung des Verfahrens werden anhand des Spektrums des reflektierten Radarsignals mit konstanter Signalfrequenz eine Relativgeschwindigkeit und/oder ein Azimutwinkel des Objekts berechnet. Das Plausibilisieren der Querbewegung des Objekts umfasst einen Vergleich der anhand des Radarsignals berechneten Relativgeschwindigkeit und/oder des anhand des Radarsignals berechneten Azimutwinkels mit der berechneten Querbewegung. Weiter kann die Querbewegung plausibilisiert werden, falls eine Dopplerverschiebung im Frequenzspektrum des Radarsignals mit konstanter Signalfrequenz festgestellt werden kann, welche einer mithilfe der FMCW-modulierten Radarsignale bestimmten Relativgeschwindigkeit zwischen dem Objekt und der Radarvorrichtung bzw. einem Fahrzeug, welches die Radarvorrichtung aufweist, entspricht. Die Querbewegung kann somit gemäß dieser Ausführungsform insbesondere eine Quergeschwindigkeit und/oder eine Relativgeschwindigkeit des Objekts umfassen. Ein querendes Objekt weist typischerweise stets eine radiale Komponente in Richtung der Radareinrichtung auf, welche zu einer Dopplerverschiebung führt. Durch Bestimmung dieser Dopplerverschiebung kann die Vorrichtung die Existenz eines querbewegten Objektes bestätigen.

Gemäß einer bevorzugten Weiterbildung des Verfahrens wird die anfänglich bekannte Querbewegung des Objekts unter Verwendung der anhand des Radarsignals berechneten Querbewegung korrigiert. Da die anhand des Radarsignals mit konstanter Signalfrequenz berechnete Quergeschwindigkeit typischerweise deutlich genauer ist, kann dadurch die anfänglich bekannte Querbewegung überprüft bzw. plausibilisiert und typischerweise auch präziser bestimmt werden. Insbesondere kann eine Relativgeschwindigkeit zwischen Vorrichtung bzw. Fahrzeug und Objekt anhand von Dopplerverschiebungen berechnet und korrigiert werden.

Gemäß einer Weiterbildung des Verfahrens umfasst die Querbewegung des Objekts eine Quergeschwindigkeit des Objekts. Weiter kann die Querbewegung einen lateralen Abstand des Objekts zu einer Fahrspur eines die Radareinrichtung aufweisenden Fahrzeugs umfassen. Die Quergeschwindigkeit und der laterale Abstand sind von besonderem Interesse, da sie die Kollisionswahrscheinlichkeit hauptsächlich beeinflussen. Diese Größen können anhand des Dopplerspektrums bestimmt werden, wobei weitere Informationen berücksichtigt werden können. Insbesondere kann der radiale Abstand der anfänglich bekannten Querbewegung berücksichtigt werden.

Gemäß einer bevorzugten Weiterbildung des Verfahrens wird anhand des Spektrums des reflektierten Radarsignals ein lateraler Abstand des Objekts zu einer Fahrspur des Fahrzeugs oder zu einer Trajektorie des Fahrzeugs berechnet. Das Plausibilisieren der Querbewegung des Objekts umfasst einen Vergleich des anhand des Radarsignals berechneten lateralen Abstands mit der berechneten Querbewegung des Objekts. Insbesondere kann die Querbewegung anhand von Sensordaten berechnet werden, wobei weiter anhand der Sensordaten ein lateraler Abstand geschätzt wird, welcher mit dem anhand der Radardaten berechneten lateralen Abstand verglichen wird. Unter einem lateralen Abstand ist der senkrecht zur Fahrbahn bzw. zur Trajektorie des Fahrzeugs gemessene Abstand des Objekts zu verstehen. Je näher sich ein Objekt an der Fahrbahn befindet, desto höher ist auch die Wahrscheinlichkeit einer Kollision. Durch genaue Kenntnis des lateralen Abstandes können derartige Situationen frühzeitig erkannt werden und dadurch kann die Sicherheit gesteigert werden. So kann zuverlässiger zwischen kritischen und unkritischen Situationen unterschieden werden, um unberechtigte Notbremsungen zu vermeiden. Die Querbewegung umfasst somit gemäß dieser Ausführungsform insbesondere einen lateralen Abstand.

Gemäß einer bevorzugten Weiterbildung des Verfahrens wird anhand des Spektrums des reflektierten Radarsignals ein Objektwinkel des Objekts bestimmt. Der laterale Abstand wird unter Verwendung des berechneten Objektwinkels des Objekts und des anhand der Sensordaten berechneten Abstandes des Objekts berechnet. Da, wie oben angesprochen, die Winkelauflösung von Radarsignalen mit konstanter Signalfrequenz sehr hoch ist, können der Objektwinkel und dadurch der laterale Abstand mit hoher Präzision berechnet werden.

Erfindungsgemäß umfassen die Sensordaten zum Berechnen der Querbewegung FMCW-Radardaten.

### Kurze Beschreibung der Zeichnungen

Es zeigen:
- Figur 1: ein schematisches Blockdiagramm einer Vorrichtung zum Plausibilisieren einer anfänglich bekannten Querbewegung eines Objekts gemäß einer Ausführungsform der Erfindung;
- Figur 2: ein schematisches Blockdiagramm einer Vorrichtung zum Plausibilisieren einer anfänglich bekannten Querbewegung eines Objekts gemäß einem nicht erfindungsgemäßen Beispiel;

- Figur 3: eine schematische Draufsicht auf ein Objekt sowie ein Fahrzeug mit einer Vorrichtung gemäß einer Ausführungsform der Erfindung;
- Figur 4: ein Flussdiagramm eines Verfahrens zum Plausibilisieren einer Querbewegung gemäß einem nicht erfindungsgemäßen Beispiel; und
- Figur 5: ein Flussdiagramm eines Verfahrens zum Plausibilisieren einer Querbewegung gemäß einem nicht erfindungsgemäßen Beispiel.

In allen Figuren sind gleiche bzw. funktionsgleiche Elemente und Vorrichtungen mit denselben Bezugszeichen versehen.

### Beschreibung der Ausführungsbeispiele

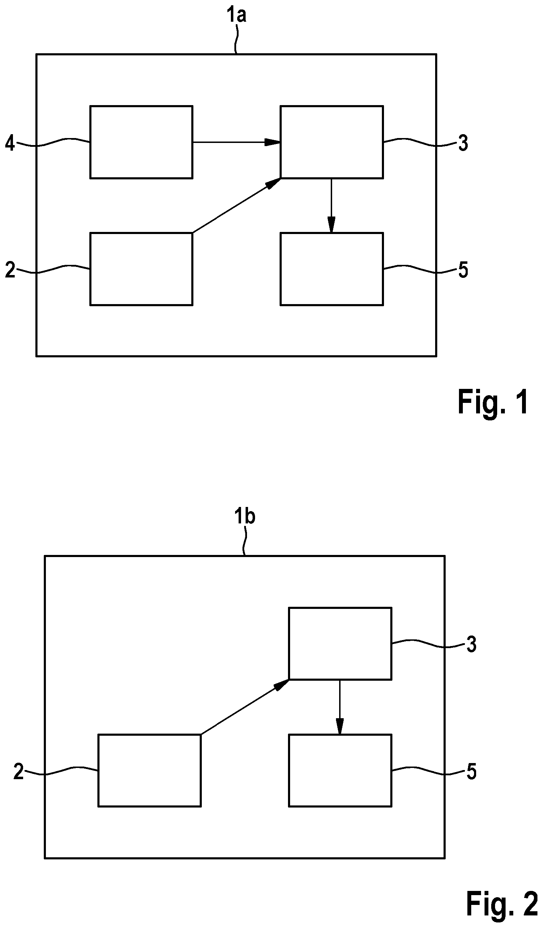

Figur 1 zeigt ein Blockdiagramm einer Vorrichtung 1a zum Plausibilisieren einer anfänglich bekannten, etwa mittels Sensordaten berechneten Querbewegung eines Objekts im Umfeld eines Fahrzeugs gemäß einer ersten Ausführungsform der Erfindung. Bei dem Objekt kann sich beispielsweise um einen Fahrradfahrer, einen Fußgänger oder ein weiteres Fahrzeug handeln. Die Vorrichtung 1a kann als Fahrerassistenzsystem ausgebildet sein oder ein Teil eines Fahrerassistenzsystems des Fahrzeugs sein. Die Vorrichtung 1a umfasst eine Schnittstelle 4, welche dazu ausgebildet ist, kabellos oder über eine Kabelverbindung Sensordaten von Sensoren des Fahrzeugs zu empfangen. Die Sensordaten umfassen Informationen zu einer Querbewegung von einem Objekt im Umfeld des Fahrzeugs, wozu insbesondere eine Quergeschwindigkeit des Objekts und optional zusätzlich ein lateraler Abstand des Objekts von der Fahrspur des Fahrzeugs zählen. Die über die Schnittstelle 4 empfangenen Daten werden an eine Recheneinrichtung 3 der Vorrichtung 1a übertragen.

Die Vorrichtung 1a weist weiter eine Radareinrichtung 2 auf, welche an dem Fahrzeug angeordnet ist und Radarsignale aussendet und empfängt. Die Radareinrichtung 2 sendet hierzu Radarsignale bzw. Signalsequenzen mit konstanter Signalfrequenz aus. Die Dauer der einzelnen Signalsequenzen betrifft vorzugsweise mindestens 10 Millisekunden, besonders bevorzugt mindestens 20 Millisekunden. Die Radareinrichtung 2 empfängt Reflexionen des Radarsignals mit konstanter Signalfrequenz und generiert Radardaten, welche ebenfalls an die Recheneinrichtung 3 übertragen werden.

Die Recheneinrichtung 3 umfasst mindestens einen Mikroprozessor, welcher dazu ausgebildet ist, die von der Schnittstelle 4 und der Radareinrichtung 2 empfangenen Daten auszuwerten. Die Recheneinrichtung 3 generiert aus den Radardaten ein Frequenzspektrum des reflektierten Radarsignals mit konstanter Signalfrequenz. Die Recheneinrichtung 3 überprüft weiter, ob die anhand der Sensordaten berechnete Relativgeschwindigkeit des Objekts ebenfalls im Frequenzspektrum des reflektierten Radarsignals mit konstanter Signalfrequenz zu erkennen ist. Die Recheneinrichtung 3 überprüft somit, ob in den entsprechenden Frequenzbereichen eine Amplitude einen vorgegebenen Schwellenwert überschreitet. Ist dies der Fall, so erkennt die Recheneinrichtung 3, dass eine entsprechende Dopplerverschiebung im Radarsignal auftritt. Die berechnete Quergeschwindigkeit kann dadurch plausibilisiert werden. Insbesondere kann die Existenz einer tatsächlichen physikalischen Querbewegung von einer Reflexpunktwanderung unterschieden werden. Optional kann die Recheneinrichtung 3 in Abhängigkeit der Größe der Amplitude weiter eine Plausibilitätsgröße angeben, inwiefern die Quergeschwindigkeit plausibilisiert werden kann oder nicht. Je größer die Amplitude, desto höher ist die Wahrscheinlichkeit, dass tatsächlich ein Objekt mit der anhand der Sensordaten berechneten Radial- oder Quergeschwindigkeit im Umfeld des Fahrzeugs vorliegt, da eine zusätzliche Überprüfung anhand des Radarsignals mit konstanter Signalfrequenz erfolgreich ist. Entsprechend wird die Plausibilitätsgröße erhöht. Umgekehrt kann die Plausibilitätsgröße verringert werden, falls im entsprechenden Frequenzbereich keine Peaks zu erkennen sind.

Die Recheneinrichtung 3 kann auch dazu ausgelegt sein, die anhand der Sensordaten berechnete Quergeschwindigkeit zu korrigieren. Falls beispielsweise im Frequenzspektrum des reflektierten Radarsignals mit konstanter Signalfrequenz bei einem Wert in der Nähe der anhand der Sensordaten berechneten Radial- oder Quergeschwindigkeit ein Peak vorliegt, dessen Amplitude einen vorgegebenen Schwellenwert überschreitet, so kann die Regeleinrichtung 3 den geschätzten Wert der Quergeschwindigkeit in diese Richtung korrigieren.

Optional kann die Recheneinrichtung 3 weiter dazu ausgebildet sein, einen lateralen Abstand des Objekts zur Fahrspur aus den Radardaten zu extrahieren. Hierzu kann die Radareinrichtung 2 beispielsweise eine Vielzahl von Radarsensoren oder einen Radarsensor mit einer Vielzahl von Sende- und Empfangsantennen aufweisen, sodass über Phasenunterschiede des empfangenen Radarsignals mit konstanter Signalfrequenz ein entsprechender Objektwinkel des Objekts bestimmt werden kann. Falls die Radarsensoren eine gleiche Ausrichtung aufweisen, so wird der Objektwinkel relativ zur gemeinsamen Hauptstrahlachse bestimmt. Die Recheneinrichtung 3 vergleicht dann den aus den Radardaten extrahierten Objektwinkel mit dem anhand der Sensordaten gemessenen Objektwinkel. Die Recheneinrichtung 3 ist dazu ausgebildet, den anhand der Sensordaten gemessenen Objektwinkel zu plausibilisieren, d. h. zu überprüfen, ob der anhand der Sensordaten gemessene Objektwinkel mit dem anhand der Radardaten extrahierten Objektwinkel übereinstimmt. In Abhängigkeit des Vergleichs kann eine entsprechende Plausibilisierungsgröße angepasst werden.

Gemäß einigen Ausführungsformen kann die Winkelanalyse nur dann durchgeführt werden, falls die Relativgeschwindigkeit nicht zu gering ist und dadurch die entsprechenden Dopplerfrequenzen sehr klein und schwierig zu detektieren sind. Insbesondere kann in diesem Fall eine Überlagerung mit stehenden Objekten auftreten. Ein zu untersuchender Winkelbereich kann weiter anhand des mittels der Sensordaten berechneten Winkelbereichs eingeschränkt werden. Die Lage und Größe des zu analysierenden Frequenzintervalls wird allgemeiner an die Bewegungsgeschwindigkeit und Bewegungsrichtung der ermittelten Querbewegung angepasst. Je größer die absolute Objektgeschwindigkeit ist und je näher die Bewegungsrichtung an einer exakt senkrechten Bewegungsrichtung liegt, desto größer ist der zu analysierende Frequenzbereich. Verdeckungseffekte können vorzugsweise auch bei der Berechnung der Plausibilisierungsgröße mit einbezogen werden. Je stärker das zu analysierende Frequenzintervall um die vorhergesagte Dopplerfrequenz herum von anderen Objekten gestört wird, desto weniger wird eine Existenzwahrscheinlichkeit eines querenden Objektes anhand des Radarsignals mit konstanter Signalfrequenz reduziert, falls keine passende Dopplerfrequenz gefunden werden kann. Vorzugsweise wird hierzu das Verhältnis zwischen erwarteter Empfangsleistung, welche aus dem geschätzten Radarquerschnitt und dem Abstand des Objekts berechnet wird, und der gemessenen Störleistung berücksichtigt.

Die Vorrichtung 1a umfasst weiter eine Steuereinrichtung 5, welche anhand der plausibilisierten Querbewegung des Objekts eine Fahrfunktion des Fahrzeugs steuert. Falls die anhand der Sensordaten bewertete Querbewegung des Objekts bestätigt wird, d. h. auch im Frequenzspektrum des reflektierten Radarsignals mit konstanter Signalfrequenz wiedergefunden wird, kann die Steuereinrichtung 5 gegebenenfalls Gegenmaßnahmen zur Vermeidung einer Kollision einleiten. Anhand der Querbewegung können beispielsweise eine Kollisionsregion und ein Kollisionszeitpunkt ermittelt werden. Die Steuereinrichtung 5 kann das Fahrzeug entsprechend lenken oder abbremsen. Insbesondere kann die Steuereinrichtung 5 eine Notbremsung durchführen. Die Steuereinrichtung 5 kann jedoch auch dazu ausgebildet sein, ein Warnsignal an den Fahrer des Fahrzeugs auszugeben.

Eine derartige Steuerung des Fahrzeugs muss nicht zwingend unterbunden werden, falls die anhand der Sensordaten berechnete Querbewegung nicht plausibilisiert werden kann. Falls das Objekttracking anhand der Sensordaten bereits eine sehr hohe Konfidenz aufweist, kann trotz fehlender Bestätigung durch das Radarsignal mit konstanter Signalfrequenz trotzdem eine Notbremsung durchgeführt werden. Derartige Situationen können insbesondere bei Verdeckungen des Objekts durch weitere Objekte entstehen.

In Figur 2 ist ein Blockdiagramm einer Vorrichtung 1b gemäß einem nicht erfindungsgemäßen Beispiel.

Diese unterscheidet sich von der in Figur 1 illustrierten Vorrichtung 1a darin, dass die Sensordaten von der Radareinrichtung 2 selbst erzeugt werden. Gemäß diesem Beispiel erzeugt die Radareinrichtung 2 zeitlich versetzt FMCW-modulierte Radarsignale, wobei die reflektierten FMCW-modulierten Radarsignale empfangen werden und entsprechende Sensordaten ausgegeben werden. Die Recheneinrichtung 3 ist dazu ausgebildet, eine Querbewegung des Objekts im Umfeld des Fahrzeugs anhand der Sensordaten zu berechnen, d. h. insbesondere eine Quergeschwindigkeit und vorzugsweise zusätzlich einen lateralen Abstand des Objekts zu bestimmen.

Die Recheneinrichtung 3 ist nun weiter dazu ausgebildet, die anhand der Sensordaten berechneten Größen der Querbewegung des Objekts zu plausibilisieren. Hierzu sendet die Radareinrichtung 2 zeitlich versetzt zu den FMCW-modulierten Radarsignalen Radarsignale mit konstanter Signalfrequenz aus und generiert anhand der empfangenen reflektierten Radarsignale mit konstanter Signalfrequenz Radardaten. Wie oben beschrieben, überprüft die Recheneinrichtung 3, ob eine entsprechende Relativgeschwindigkeit in dem Frequenzspektrum vorliegt. Ist dies der Fall, kann die Recheneinrichtung 3 zusätzlich den lateralen Abstand extrahieren und vergleichen.

Der übrige Aufbau der Vorrichtung 1b entspricht der in Figure 1 dargestellten Ausführungsform und soll daher nicht wiederholt werden.

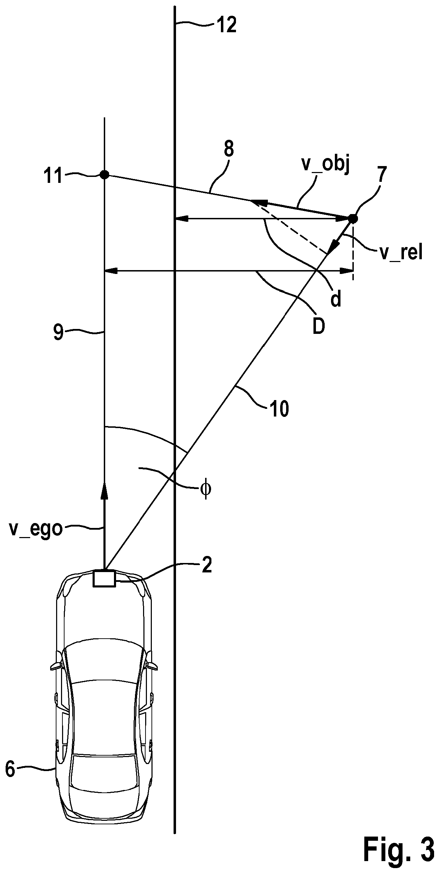

In Figur 3 ist ein beispielhaftes Szenario illustriert. Das Fahrzeug 6 weist eine der oben beschriebenen Vorrichtungen 1a, 1b auf. Insbesondere ist eine Radareinrichtung 2 an der Front des Fahrzeugs 6 angeordnet. Das Fahrzeug 6 bewegt sich mit einer Eigengeschwindigkeit v_ego entlang einer Eigentrajektorie 9. Unter einem Objektwinkel φ, welcher relativ zur Fahrtrichtung bzw. relativ zur Hauptstrahlrichtung der Radareinrichtung 2 gemessen wird, wird anhand von Sensordaten ein Objekt 7 erkannt. Das Objekt 7 bewegt sich mit einer Objektgeschwindigkeit v_obj entlang einer Objekttrajektorie 8 auf einen Schnittpunkt 11 mit der Eigentrajektorie 9 zu. Die Quergeschwindigkeit des Objekts 7 entspricht der Geschwindigkeitskomponente senkrecht zur Fahrtrichtung oder Fahrbahn. Das Objekt 7 weist eine Radialgeschwindigkeit v_rad in Richtung des Fahrzeugs 6 auf, welche der Projektion der Objektgeschwindigkeit v_obj auf eine Verbindungslinie 10 zwischen der Radareinrichtung 2 und dem Objekt 7 entspricht. Die Relativgeschwindigkeit des Objekts 7 hängt weiter von der Geschwindigkeit des Fahrzeugs 6 ab. Das Objekt 7 weist einen lateralen Abstand d zu einer Fahrbahnbegrenzung 12 und einen Trajektorienabstand D zur Eigentrajektorie das Fahrzeug 6 auf. Wie oben beschrieben, ist die Vorrichtung 1a, 1b des Fahrzeugs 6 dazu ausgebildet, die anhand der Sensordaten berechnete Querbewegung zu plausibilisieren. Die Vorrichtung 1a, 1b überprüft hierzu einerseits, ob die Existenz des Objekts 7 anhand der Radarsignale mit konstanter Signalfrequenz bestätigt werden kann, und ob gegebenenfalls die Querbewegung korrigiert werden kann. Insbesondere können die Quergeschwindigkeit und/oder der laterale Abstand des Objekts 7 überprüft und korrigiert werden.

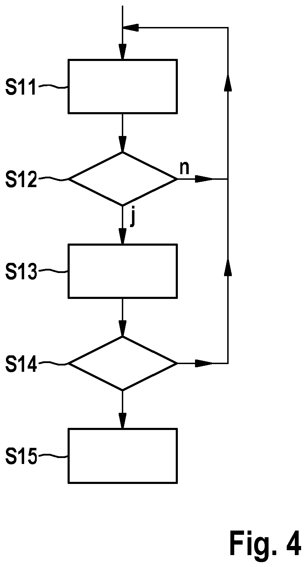

In Figur 4 ist ein Flussdiagramm eines Verfahrens gemäß einem nicht erfindungsgemäßen Beispiel.

Hierzu werden in einem Verfahrensschritt S11 Sensordaten erzeugt und eine Querbewegung eines Objekts 7 im Umfeld eines Fahrzeugs 6 berechnet. Die Sensordaten werden mittels FMCW-modulierter Radarsignale generiert.

In einem Verfahrensschritt S12 wird anhand der berechneten Querbewegung überprüft, ob eine Kollision zwischen dem Fahrzeug 6 und dem Objekt 7 wahrscheinlich ist. Falls die berechnete Wahrscheinlichkeit einen vorgegebenen Schwellenwert überschreitet, wird erkannt, dass es sich um eine kritische Querbewegung handelt. In einem Verfahrensschritt S13 wird eine Analyse des Dopplerspektrums eines ausgesendeten und empfangenen Radarsignals mit konstanter Signalfrequenz durchgeführt. Andernfalls wird der nächste Messzyklus analysiert, S11.

Die Analyse des Dopplerspektrums umfasst ein Plausibilisieren der Querbewegung. Darauf aufbauend wird in einem Schritt S14 eine Existenzwahrscheinlichkeit des Objekts ermittelt und in einem Verfahrensschritt S15 eine Gegenmaßnahme eingeleitet, beispielsweise eine Ausgabe eines akustischen, visuellen oder optischen Warnsignals, eine Warnung durch einen Bremsruck, ein Ausweichmanöver oder eine Notbremsung.

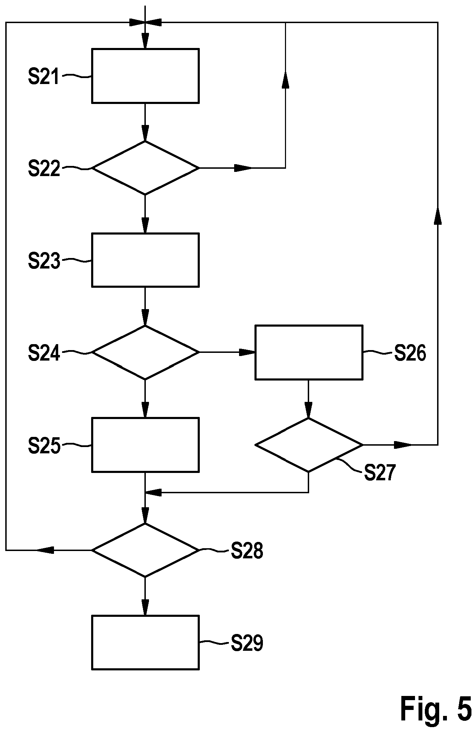

Es kann auch eine Notbremsung durchgeführt werden, sobald eine entsprechende Dopplerfrequenz gefunden wird. In Figur 5 ist ein Flussdiagramm eines Verfahrens zum Plausibilisieren einer mittels Sensordaten berechneten Querbewegung eines Objekts 7 im Umfeld eines Fahrzeugs 6 gemäß einem nicht erfindungsgemäßen Beispiel.

In einem Verfahrensschritt S21 wird in der oben beschriebenen Weise die Querbewegung des Objekts anhand der Sensordaten ermittelt.

Im Verfahrensschritt S22 wird anhand der Sensordaten überprüft, ob es sich bei der Querbewegung um eine kritische Querbewegung handelt. Die Schwelle, ob es sich um eine kritische Querbewegung handelt, kann hierbei vorzugsweise kleiner gewählt werden als im Schritt S12 des in der Figur 4 illustrierten Verfahrens. Demnach können auch bereits leicht kritische Querbewegungen untersucht werden.

Derartige Querbewegungen werden, wie oben beschrieben, in einem Verfahrensschritt S23 durch Analyse des Dopplerspektrums eines Radarsignals mit konstanter Signalfrequenz plausibilisiert.

Im Verfahrensschritt S24 wird überprüft, ob das Radarsignal mit konstanter Signalfrequenz die Querbewegung bestätigt. Ist dies der Fall, so wird in einem Verfahrensschritt S25 die Objektbewegung gegebenenfalls korrigiert. Andernfalls wird in einem Verfahrensschritt S26 die Existenzwahrscheinlichkeit des Objekts bzw. die Wahrscheinlichkeit einer Kollision reduziert. In einem Verfahrensschritt S27 wird überprüft, ob die Existenzwahrscheinlichkeit hoch genug ist. Ist dies nicht der Fall, wird das Verfahren erneut durchgeführt. Andernfalls sowie im Anschluss an Verfahrensschritt S25 wird in einem Verfahrensschritt S28 überprüft, ob die Bewegung kritisch genug ist, d. h. eine Kollision wahrscheinlich ist. Ist dies nicht der Fall, wird das Verfahren wiederholt, andernfalls wird eine der oben beschriebenen Gegenmaßnahmen eingeleitet, S29.

## Patentansprüche

1. Verfahren zum Plausibilisieren einer anhand von FMCW-Radardaten berechneten Querbewegung eines Objekts (7), mit den Schritten:
Empfangen der FMCW-Radardaten von Sensoren eines Fahrzeugs (6) mittels einer Schnittstelle (4), welche dazu ausgebildet ist, die FMCW-Radardaten von Sensoren des Fahrzeugs zu empfangen, wobei die FMCW-Radardaten Informationen zu der Querbewegung von dem Objekt (7) im Umfeld des Fahrzeugs umfassen;
Aussenden eines Radarsignals mit konstanter Signalfrequenz und Empfangen von Reflexionen des Radarsignals mit konstanter Signalfrequenz mittels einer Radareinrichtung (2); und
Plausibilisieren der Querbewegung des Objekts (7) durch Analysieren von der Querbewegung entsprechenden Frequenzbereichen in einem Spektrum des reflektierten Radarsignals mit konstanter Signalfrequenz.

2. Verfahren nach einem der vorangehenden Ansprüche, wobei die Querbewegung eine Quergeschwindigkeit des Objekts (7) umfasst.

3. Verfahren nach einem der vorangehenden Ansprüche, wobei die Radareinrichtung (2) an einem Fahrzeug (6) angeordnet ist, und wobei die Querbewegung einen lateralen Abstand des Objekts (7) zu einer Fahrspur des Fahrzeugs (6) umfasst.

4. Vorrichtung (1a; 1b) zum Plausibilisieren einer anhand von FMCW-Radardaten berechneten Querbewegung eines Objekts (7), mit:
einer Schnittstelle (4), welche dazu ausgebildet ist, die FMCW-Radardaten von Sensoren eines Fahrzeugs (6) zu empfangen, wobei die FMCW-Radardaten Informationen zu der Querbewegung von dem Objekt (7) im Umfeld des Fahrzeugs (6) umfassen;
einer Radareinrichtung (2), welche dazu ausgebildet ist, ein Radarsignal mit konstanter Signalfrequenz auszusenden und Reflexionen des Radarsignals mit konstanter Signalfrequenz zu empfangen; und
einer Recheneinrichtung (3), welche dazu ausgebildet ist, die Querbewegung des Objekts (7) durch Analysieren von der Querbewegung entsprechenden Frequenzbereichen in einem Spektrum des reflektierten Radarsignals mit konstanter Signalfrequenz zu plausibilisieren.

5. Vorrichtung (1a; 1b) nach Anspruch 4, weiter mit einer Steuereinrichtung (5), welche dazu ausgebildet ist, anhand der plausibilisierten Querbewegung des Objekts (7) eine Fahrfunktion eines Fahrzeugs (6) zu steuern.

## Claims

1. Method for checking the plausibility of a transverse movement of an object (7) calculated on the basis of FMCW radar data, comprising the following steps:
receiving the FMCW radar data from sensors of a vehicle (6) by means of an interface (4) designed to receive the FMCW radar data from sensors of the vehicle, wherein the FMCW radar data comprise information concerning the transverse movement of the object (7) in the environment of the vehicle;
emitting a radar signal with a constant signal frequency and receiving reflections of the radar signal with a constant signal frequency by means of a radar device (2); and
checking the plausibility of the transverse movement of the object (7) by analysing frequency ranges corresponding to the transverse movement in a spectrum of the reflected radar signal with a constant signal frequency.

2. Method according to any of the preceding claims, wherein the transverse movement comprises a transverse velocity of the object (7).

3. Method according to any of the preceding claims, wherein the radar device (2) is arranged on a vehicle (6), and wherein the transverse movement comprises a lateral distance of the object (7) with respect to a lane of the vehicle (6).

4. Apparatus (1a; 1b) for checking the plausibility of a transverse movement of an object (7) calculated on the basis of FMCW radar data, comprising:
an interface (4) designed to receive the FMCW radar data from sensors of a vehicle (6), wherein the FMCW radar data comprise information concerning the transverse movement of the object (7) in the environment of the vehicle (6);
a radar device (2) designed to emit a radar signal with a constant signal frequency and to receive reflections of the radar signal with a constant signal frequency; and
a computing device (3) designed to check the plausibility of the transverse movement of the object (7) by analysing frequency ranges corresponding to the transverse movement in a spectrum of the reflected radar signal with a constant signal frequency.

5. Apparatus (1a; 1b) according to Claim 4, further comprising a control device (5) designed to control a driving function of a vehicle (6) on the basis of the transverse movement, checked for plausibility, of the object (7).

## Revendications

1. Procédé permettant de contrôler la plausibilité d'un mouvement transversal d'un objet (7), calculé à partir de données radar FMCW, comprenant les étapes suivantes :
recevoir les données radar FMCW en provenance de capteurs d'un véhicule (6) au moyen d'une interface (4), qui est conçue pour recevoir les données radar FMCW en provenance des capteurs du véhicule, les données radar FMCW comprenant des informations relatives au mouvement transversal de l'objet (7) dans l'environnement du véhicule ;
émettre un signal radar à fréquence de signal constante et recevoir des réflexions du signal radar à fréquence de signal constante au moyen d'un dispositif radar (2) ; et
contrôler la plausibilité du mouvement transversal de l'objet (7) par analyse des plages de fréquences correspondant au mouvement transversal dans un spectre du signal radar réfléchi à fréquence de signal constante.

2. Procédé selon l'une des revendications précédentes, dans lequel le mouvement transversal comprend une vitesse transversale de l'objet (7).

3. Procédé selon l'une des revendications précédentes, dans lequel le dispositif radar (2) est disposé sur un véhicule (6), et dans lequel le mouvement transversal comprend une distance latérale de l'objet (7) par rapport à une voie de circulation du véhicule (6).

4. Dispositif (1a ; 1b) permettant de contrôler la plausibilité d'un mouvement transversal d'un objet (7), calculé à partir de données radar FMCW, comprenant :
une interface (4), qui est conçue pour recevoir les données radar FMCW en provenance de capteurs d'un véhicule (6), les données radar FMCW comprenant des informations relatives au mouvement transversal de l'objet (7) dans l'environnement du véhicule (6) ;
un dispositif radar (2), qui est conçu pour émettre un signal radar à fréquence de signal constante et recevoir des réflexions du signal radar à fréquence de signal constante ; et
un dispositif de calcul (3), qui est conçu pour contrôler la plausibilité du mouvement transversal de l'objet (7) par analyse des plages de fréquences correspondant au mouvement transversal dans un spectre du signal radar réfléchi à fréquence de signal constante.

5. Dispositif (1a ; 1b) selon la revendication 4, comprenant en outre un dispositif de commande (5), qui est conçu pour commander une fonction de conduite d'un véhicule (6) à partir du mouvement transversal de l'objet (7) dont la plausibilité a été contrôlée.
